# DEMANDE DE BREVET EUROPEEN

(11) **EP 3 863 140 A1**
(43) Date de publication de la demande: **11.08.2021**
(21) Numéro de dépôt: 21153859.0
(22) Date de dépôt: 27.01.2021
(51) Int. Cl.: H02H 7/125, H02M 7/219, H02M 1/08, H02M 1/32

(54) **PROTECTION CONTRE DES SURTENSIONS**

(30) Priorité: 04.02.2020 FR 2001096
(71) Demandeur: STMicroelectronics (Rousset) SAS, 13790 Rousset (FR)
(72) Inventeur: TAILLIET, Francois, 13710 FUVEAU (FR)
(74) Mandataire: Cabinet Beaumont

(57) **Abrégé**

La présente description concerne un dispositif (3) comprenant un pont redresseur (4) comprenant : une branche connectée entre des premier (202) et deuxième (201) noeuds ; une autre branche comprenant des premier (208) et deuxième (209) transistors MOS en série entre les premier (201) et deuxième (202) noeuds et ayant leurs sources reliées entre elles ; une résistance (R1) connectant la grille du premier transistor (208) et le deuxième noeud (201) ; une autre résistance (R2) connectant la grille du deuxième transistor (209) et le premier noeud (202) ; et pour chaque transistor (208, 209), un circuit (300) comprenant des première (301) et deuxième (302) bornes connectées respectivement au drain et à la grille dudit transistor (208, 209), et étant configuré pour coupler électriquement ses première et deuxième bornes lorsqu'une tension entre la première borne dudit circuit et la première borne de l'autre circuit est supérieure à un seuil dudit circuit.

## Description

### Domaine technique

La présente description concerne de façon générale les circuits électroniques, et plus particulièrement une protection contre des surtensions susceptibles de se produire entre des plots de tels circuits électroniques, notamment suite à une décharge électrostatique.

### Technique antérieure

On connaît des dispositifs de communication sans fil adaptés à communiquer au moyen d'ondes électromagnétiques, par exemple au moyen d'ondes radiofréquences. Lorsqu'une antenne d'un premier dispositif reçoit une onde électromagnétique émise par un deuxième dispositif, l'énergie reçue par l'antenne du premier dispositif peut servir à alimenter électriquement des circuits, par exemple des circuits intégrés, du premier dispositif. Pour cela, le premier dispositif comprend généralement un pont redresseur de tension configuré pour recevoir une tension disponible entre deux plots ou bornes reliés aux extrémités respectives d'un enroulement conducteur de l'antenne du premier dispositif, et pour fournir une tension d'alimentation redressée.

Toutefois, des surtensions, par exemple provoquées par des décharges électrostatiques, peuvent se produire entre les deux plots reliés aux extrémités respectives de l'enroulement conducteur de l'antenne. Ces surtensions sont susceptibles de détériorer, voire détruire, des circuits du premier dispositif reliés à au moins l'un de ces deux plots, notamment le pont redresseur qui est relié à ces plots.

### Résumé de l'invention

Il existe un besoin de pallier tout ou partie des inconvénients des dispositifs de communication sans fil connus, notamment en ce qui concerne la protection de ces dispositifs contre des surtensions, par exemple provoquées par des décharges électrostatiques, susceptibles de se produire entre des plots reliés aux extrémités respectives d'un enroulement conducteur d'antenne.

Un mode de réalisation pallie tout ou partie des inconvénients des dispositifs de communication sans fil connus.

Un mode de réalisation pallie tout ou partie des inconvénients des dispositifs de communication sans fil connus qui sont liés à des surtensions, par exemple provoquées par des décharges électrostatiques, susceptibles de se produire entre deux plots reliés aux extrémités respectives d'un enroulement conducteur d'antenne de ces dispositifs.

Un mode de réalisation pallie tout ou partie des inconvénients des ponts redresseurs de tension connus configurés pour redresser une tension disponible entre deux plots reliés aux extrémités respectives d'un enroulement conducteur d'antenne d'un dispositif de communication sans fil.

Un mode de réalisation prévoit un dispositif comprenant un pont redresseur comprenant :
une première branche connectée entre des premier et deuxième noeuds d'entrée du pont et comprenant un troisième noeud de sortie du pont ;
une deuxième branche comprenant des premier et deuxième transistors MOS connectés en série entre les premier et deuxième noeuds, les sources des premier et deuxième transistors étant reliées à un quatrième noeud de sortie du pont ;
une première résistance connectée entre la grille du premier transistor et le deuxième noeud ;
une deuxième résistance connectée entre la grille du deuxième transistor et le premier noeud ; et
pour chacun des premier et deuxième transistors, un circuit associé audit transistor et comprenant une première borne connectée au drain dudit transistor et une deuxième borne connectée à la grille dudit transistor, le circuit étant configuré pour coupler électriquement ses première et deuxième bornes lorsque une valeur absolue d'une tension entre la première borne dudit circuit et la première borne de l'autre circuit est supérieure ou égale à une valeur absolue d'un seuil dudit circuit et que ladite tension est du même signe que ledit seuil.

Selon un mode de réalisation, chaque circuit est en outre configuré pour isoler électriquement ses première et deuxième bornes lorsque la valeur absolue de la tension entre la première borne dudit circuit et la première borne de l'autre circuit est inférieure à la valeur absolue du seuil dudit circuit et également lorsque ladite tension est de signe opposé au signe du seuil dudit circuit.

Selon un mode de réalisation, la première branche du pont comprend des troisième et quatrième transistors MOS connectés en série entre les premier et deuxième noeuds et montés chacun en diode, les sources des troisième et quatrième transistors étant connectées au troisième noeud.

Selon un mode de réalisation, les premier, deuxième, troisième et quatrième transistors ont un même type de canal N ou P.

Selon un mode de réalisation, chaque circuit comprend une branche comportant un premier dipôle à fonction diode et un deuxième dipôle à fonction diode reliés en anti-série, une extrémité de ladite branche étant connectée à la première borne dudit circuit et une autre extrémité de ladite branche étant reliée à la première borne de l'autre circuit.

Selon un mode de réalisation, dans chaque circuit, les premier et deuxième dipôles sont configurés pour bloquer un courant lorsque la valeur absolue de la tension entre la première borne dudit circuit et la première borne de l'autre circuit est inférieure à la valeur absolue du seuil dudit circuit et lorsque ladite tension est de signe opposé au signe du seuil dudit circuit, et pour conduire un courant lorsque la valeur absolue de la tension entre la première borne dudit circuit et la première borne de l'autre circuit est supérieure ou égale à la valeur absolue du seuil dudit circuit et que ladite tension est du même signe que ledit seuil.

Selon un mode de réalisation, chaque circuit est configuré pour que la conduction du courant dans le premier dipôle dudit circuit provoque un couplage électrique des première et deuxième bornes dudit circuit.

Selon un mode de réalisation, dans au moins un des circuits, de préférence dans chaque circuit, ladite autre extrémité de la branche dudit circuit est connectée à la deuxième borne dudit circuit.

Selon un mode de réalisation, dans ledit au moins un des circuits, de préférence dans chaque circuit, ladite branche dudit circuit comprend :
des cinquième, sixième et septième noeuds ;
une troisième résistance connectée en série avec le premier dipôle entre le cinquième noeud et le sixième noeud ; et
une quatrième résistance connectée entre le sixième noeud et le septième noeud,
chaque circuit comprenant en outre un transistor dont une borne de commande est connectée au sixième noeud et dont des bornes de conduction sont connectées respectivement au cinquième noeud et au septième noeud, une chute de tension dans la quatrième résistance conditionnant une mise en conduction dudit transistor.

Selon un mode de réalisation, dans ledit au moins un des circuits, de préférence dans chaque circuit :
le deuxième dipôle est connecté entre la première borne dudit circuit et le cinquième noeud, le septième noeud étant connecté à la deuxième borne dudit circuit ; ou
le deuxième dipôle est connecté entre le septième noeud et la deuxième borne dudit circuit, le cinquième noeud étant connecté à la première borne dudit circuit ; ou
le deuxième dipôle est connecté entre la première borne dudit circuit et le septième noeud, le cinquième noeud étant connecté à la deuxième borne dudit circuit ; ou
le deuxième dipôle est connecté entre le cinquième noeud et la deuxième borne dudit circuit, le septième noeud étant connecté à la première borne dudit circuit.

Selon un mode de réalisation, dans au moins un desdits circuits, de préférence dans chaque circuit, ladite autre extrémité de la branche dudit circuit est connectée à une troisième borne dudit circuit, ladite troisième borne dudit circuit étant connectée à la première borne dudit autre circuit.

Selon un mode de réalisation, dans ledit au moins un desdits circuits, de préférence dans chaque circuit, ladite branche comprend une troisième résistance en série avec les premier et deuxième dipôles, chaque circuit comprenant en outre un transistor dont une borne de commande est connectée à une borne de la troisième résistance, dont une première borne de conduction est reliée à la première borne dudit circuit, et dont une deuxième borne de conduction est reliée à la deuxième borne dudit circuit, une chute de tension dans la troisième résistance conditionnant une mise en conduction dudit transistor.

Selon un mode de réalisation, dans ledit au moins un desdits circuits, de préférence dans chaque circuit, le deuxième dipôle est connecté entre la première borne dudit circuit et la première borne de conduction dudit transistor, la deuxième borne de conduction dudit transistor étant connectée à la deuxième borne dudit circuit.

Selon un mode de réalisation, au moins un desdits circuits, de préférence chaque circuit, comprend en outre un troisième dipôle à fonction diode connecté en série avec le transistor dudit circuit entre les première et deuxième bornes dudit circuit, le troisième dipôle étant connecté à la deuxième borne dudit circuit et la branche dudit circuit étant connectée entre les première et troisième bornes dudit circuit.

Selon un mode de réalisation, le premier dipôle est constitué d'une diode Zener, d'un ensemble de plusieurs diodes Zener connectées en parallèle les unes des autres, ou d'un ensemble de plusieurs transistors MOS connectés en série et étant chacun monté en diode.

Un autre mode de réalisation prévoit un circuit intégré comprenant un dispositif tel que décrit.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre, sous la forme d'un circuit, une partie d'un dispositif comprenant un exemple de pont redresseur ;
la figure 2 représente plusieurs courbes illustrant différentes mises en conduction d'un transistor MOS ;
la figure 3 illustre, sous la forme d'un circuit, une partie d'un dispositif comprenant un pont redresseur selon un mode de réalisation ;
la figure 4 illustre, sous la forme d'un circuit, une partie d'un dispositif comprenant un pont redresseur selon un autre mode de réalisation ;
la figure 5 illustre, sous la forme d'un circuit, une partie d'un dispositif comprenant un pont redresseur selon encore un autre mode de réalisation ; et
la figure 6 illustre, sous la forme d'un circuit, une partie d'un dispositif comprenant un pont redresseur selon encore un autre mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers protocoles de communication sans fil, notamment par ondes radiofréquences, et leurs mises en oeuvre n'ont pas été détaillés, les modes de réalisation décrits étant compatibles avec les protocoles de communication sans fil connus et les mises en oeuvre connues de ces protocoles. De plus, les fonctions mises en oeuvre par les dispositifs connus comprenant un pont redresseur de tension relié à deux plots du dispositif entre lesquels est disponible une tension à redresser n'ont pas été décrites, les modes de réalisation décrits étant compatibles avec les fonctions usuelles de ces dispositifs connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Dans la suite de la description, sauf indication contraire, tous les potentiels et les tensions sont référencés par rapport à un même potentiel de référence, typiquement la masse GND, ou, dit autrement, un potentiel de référence nul.

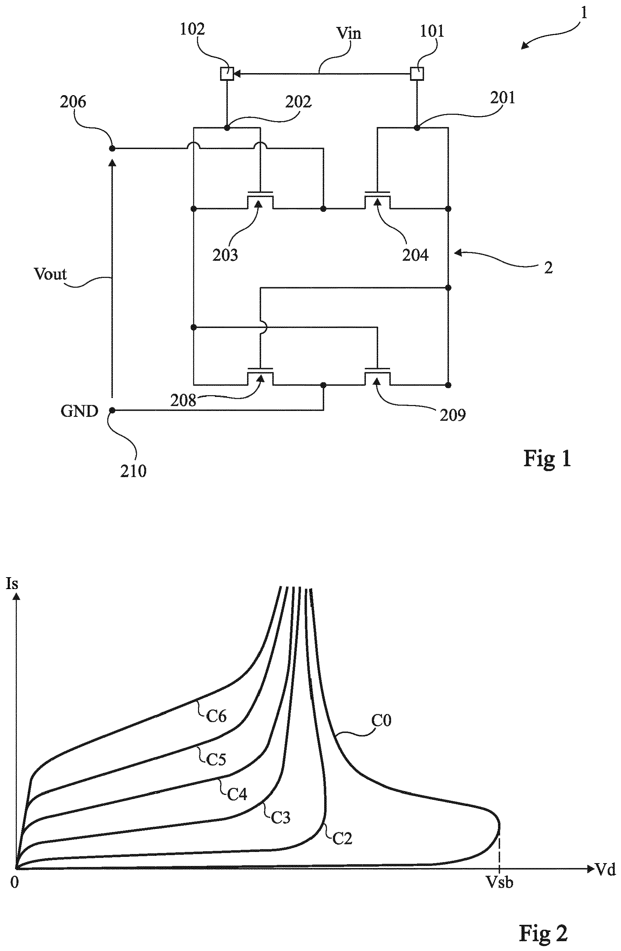

La figure 1 illustre, sous la forme d'un circuit, une partie d'un dispositif 1 comprenant un exemple de pont redresseur 2.

Dans cet exemple, le dispositif 1 est un dispositif de communication sans fil comprenant un enroulement conducteur d'antenne, ou inductance ou bobine, non représenté, dont les extrémités sont connectées respectivement à un plot, ou borne, 101, et à un plot, ou borne, 102 du dispositif 1. Dans la suite de la description, on considère à titre d'exemple le cas où le dispositif 1 est un dispositif de communication radiofréquence, par exemple un dispositif 1 de communication en champ proche ("Near Field Communication") ou NFC.

Un transistor MOS ("Métal Oxide Semiconductor" - métal oxyde semiconducteur) à canal N (non représenté) peut être connecté entre les plots 101 et 102, par exemple pour mettre en oeuvre une fonction de retro-modulation d'un champ électromagnétique reçu par l'antenne du dispositif 1. Ce transistor MOS de retro-modulation a une première borne de conduction, par exemple sa source, reliée, de préférence connectée, au plot 102, et une deuxième borne de conduction, par exemple son drain, reliée, de préférence connectée, au plot 101.

Une capacité (non représentée) peut être prévue entre les plots 101 et 102, par exemple pour ajuster la fréquence de résonance de l'antenne du dispositif 1.

La figure 1 représente plus particulièrement le pont redresseur de tension 2 du dispositif 1.

Le pont 2 est relié aux plots 101 et 102 pour recevoir une tension Vin à redresser. La tension Vin correspond à la différence entre le potentiel du noeud 102 et celui du noeud 101, et est, dans cet exemple, référencée par rapport au noeud 101. A titre d'exemple, la tension Vin présente une amplitude maximale inférieure à 6 V, par exemple égale à 5,5 V (la tension Vin allant alors par exemple de -5,5 V à +5,5 V).

Le pont redresseur 2 est configuré pour fournir une tension d'alimentation redressée Vout à des circuits (non représentés) du dispositif 1. La tension Vout correspond à la différence entre le potentiel d'un noeud 206 de sortie du pont 2, et celui d'un noeud 210 de sortie du pont 2, et est, dans cet exemple, référencée par rapport au noeud 210. Dans cet exemple, le noeud 210 est au potentiel de référence GND, typiquement la masse.

Le pont redresseur 2 comprend deux noeuds, ou bornes, 201 et 202 reliés aux plots respectifs 101 et 102. Dans l'exemple illustré, les noeuds 201 et 202 sont connectés au plots respectifs 101 et 102. Selon un autre exemple, non illustré, le noeud 201, respectivement 202, est relié au plot 101, respectivement 102, par une résistance de faible valeur, quelques Ohms typiquement.

Le pont redresseur 2 comprend deux branches connectées en parallèle l'une de l'autre entre les noeuds d'entrée 201 et 202.

Une des deux branches comprend deux transistors MOS à canal N 203 et 204 connectés en série entre les noeuds 201 et 202. Les transistors 203 et 204 sont connectés l'un à l'autre au niveau du noeud 206 du pont 2, ou, dit autrement, chacun des transistors 203 et 204 est connecté au noeud 206. Chaque transistor 203, 204 est monté en diode, c'est-à-dire que sa grille et son drain sont connectés entre eux. Dans l'exemple représenté, le transistor 203 a son drain et sa grille connectés au noeud 202, le transistor 204 ayant son drain et sa grille connectés au noeud 201, et les sources des transistors 203 et 204 étant connectées au noeud 206, ou, dit autrement, étant connectées entre elles au niveau du noeud 206.

Selon un autre exemple non illustré, chacun des transistors 203 et 204 peut être remplacé par une diode, par exemple en remplaçant le transistor 203 par une diode dont l'anode est connectée au noeud 202 et dont la cathode est connectée au noeud 206, et le transistor 204 par une autre diode dont l'anode est connectée au noeud 201 et dont la cathode est connectée au noeud 206.

L'autre des deux branches du pont redresseur 2 comprend deux transistors MOS à canal N 208 et 209 connectés en série entre les noeuds 201 et 202. Les transistors 208 et 209 sont connectés l'un à l'autre au niveau du noeud 210 du pont redresseur 2, ou, dit autrement, chacun des transistors 208 et 209 est connecté au noeud 210. A titre d'exemple, le transistor 208 a son drain connecté au noeud 202, sa source connectée au noeud 210 et sa grille connectée au noeud 201, le transistor 209 ayant son drain connecté au noeud 201, sa source connectée au noeud 210 et sa grille connectée au noeud 202.

Les transistors 208 et 209 ont leurs régions de corps ("body") ou régions de formation de canal reliées, de préférence connectées au noeud 210, pour être au potentiel de ce noeud 210.

En fonctionnement, lorsqu'une tension alternative Vin est disponible entre les plots 101 et 102, donc dans cet exemple entre les noeuds 201 et 202, le pont redresseur 2 fournit la tension redressée Vout. En particulier, quand le potentiel du noeud 202 est suffisamment supérieur à celui du noeud 201, les transistors 203 et 209 sont passants et les transistors 204 et 208 sont bloqués. A l'inverse, quand le potentiel du noeud 201 est suffisamment supérieur à celui du noeud 202, les transistors 203 et 209 sont bloqués et les transistors 204 et 208 sont passants.

On considère qu'une surtension se produit entre les plots 102 et 101, donc entre les noeuds 201 et 202, cette surtension correspondant par exemple à une augmentation du potentiel du plot 102 par rapport à celui du plot 101, ou surtension positive. Une surtension positive résulte par exemple d'une décharge électrostatique sur le plot 102, par exemple une décharge électrostatique de 1,5 kV, voire 2 kV, selon le modèle du corps humain ("Human Body Model") ou HBM. Une telle décharge électrostatique est par exemple provoquée par une personne touchant le plot 102 ou l'enroulement conducteur d'antenne du dispositif 1 qui est relié à ce plot 102.

Cette surtension positive entre les plots 102 et 101 entraîne la circulation d'un courant important, par exemple d'au moins 1 A, entre les plots 102 et 101, par exemple un courant positif circulant du plot 102 jusqu'au noeud 210 via le transistor 208, et du noeud 210 jusqu'au plot 101 via la diode en direct entre le substrat (corps) et le drain du transistor 209.

Comme la grille et la source du transistor 208 sont sensiblement au même potentiel, à savoir celui du noeud 210, le transistor 208 devrait être bloqué. Toutefois, lorsque la différence de potentiel entre le drain et la source du transistor MOS 208 dépasse un seuil, dit seuil de repliement ("snapback"), le transistor bipolaire parasite du transistor MOS 208 entre en conduction et un courant circule du drain vers la source du transistor MOS 208. Ce courant circule ensuite vers le noeud 201, via la diode en direct entre la région de corps (substrat) et le drain du transistor 209. La conduction du courant entre le drain et la source du transistor 208 présente, entre les bornes de conduction du transistor 208, une impédance différentielle négative, ce qui pose problème.

Un exemple d'un tel problème survient lorsque le transistor MOS 208 est mis en oeuvre au moyen de plusieurs transistor MOS élémentaires connectés en parallèle les uns des autres. En effet, en raison des dispersions de fabrication, le seuil de repliement d'un premier de ces transistors élémentaires peut être plus faible que celui de tous les autres transistors élémentaires. Il en résulte que la mise en conduction du transistor bipolaire parasite de ce premier transistor MOS élémentaire intervient avant la mise en conduction des transistors bipolaires parasites des autres transistors MOS élémentaires. Tout le courant circulant dans le transistor MOS 208 passe alors par ce premier transistor MOS élémentaire, ce qui peut conduire à une détérioration, voire à une destruction, de ce premier transistor MOS élémentaire.

Bien que cela ne soit pas détaillé, les problèmes illustrés ci-dessus en relation avec le transistor 208 lors d'une surtension positive entre les plots 102 et 101 se posent de manière symétrique pour le transistor 209 lors d'une surtension entre les plots 102 et 101 correspondant à une augmentation du potentiel du noeud 201 par rapport au potentiel du noeud 202, ou surtension négative.

Pour pallier tout ou partie des inconvénients du pont redresseur 2, l'inventeur propose ici d'associer, à chacun des transistors 208 et 209, un circuit, dit de déclenchement, dont des première et deuxième bornes sont connectées respectivement au drain et à la grille du transistor 208 ou 209 auquel est associé ce circuit. En outre, une résistance est connectée entre la grille du transistor 208 et le noeud 201 (drain du transistor 209), une autre résistance étant connectée entre la grille du transistor 209 et le noeud 202 (drain du transistor 208).

Chacun des circuits de déclenchement est configuré pour coupler électriquement ses première et deuxième bornes lorsqu'une tension entre sa première borne et la première borne de l'autre circuit est supérieure ou égale à un seuil du circuit. Dit autrement, un premier des circuits de déclenchement associé au transistor 208 est configuré pour relier ou coupler électriquement ses première et deuxième bornes quand la tension entre sa première borne (drain du transistor 208 - noeud 202) et la première borne (drain du transistor 209 - noeud 201) du deuxième circuit de déclenchement associé au transistor 209 dépasse le seuil du premier circuit, le deuxième circuit étant configuré pour relier électriquement ses première et deuxième bornes quand la tension entre sa première borne et la première borne du premier circuit dépasse le seuil du deuxième circuit. Le dépassement du seuil du circuit de déclenchement considéré par la tension entre la première borne de ce circuit et la première borne de l'autre circuit est indicatif d'une surtension entre les noeuds 201 et 202.

En outre, chacun des circuits de déclenchement est configuré pour isoler ou découpler électriquement ses première et deuxième bornes l'une de l'autre lorsque la tension entre la première borne du circuit et la première borne de l'autre circuit est inférieure au seuil du circuit. Dit autrement, le premier circuit est configuré pour isoler électriquement ses première et deuxième bornes quand la tension entre sa première borne et la première borne du deuxième circuit est inférieure au seuil du premier circuit de déclenchement, le deuxième circuit étant configuré pour isoler électriquement ses première et deuxième bornes quand la tension entre sa première borne et la première borne du premier circuit est inférieure au seuil du deuxième circuit. Ainsi, en l'absence de surtension entre les noeuds 201 et 202, le fonctionnement du pont redresseur n'est pas modifié par la présence des circuits de déclenchement et fonctionne de façon similaire au pont redresseur 2 décrit en relation avec la figure 1.

Dans la suite de la description et dans les revendications, on désigne par dipôle à fonction diode un composant ou un circuit ayant deux bornes entre lesquelles ce composant ou circuit se comporte comme une diode. L'une des bornes du dipôle est appelée cathode du dipôle et l'autre borne du dipôle est appelée anode du dipôle. Le dipôle a, entre son anode et sa cathode, le même comportement qu'aurait une diode entre son anode et sa cathode respectivement.

Selon un mode de réalisation, chaque circuit de déclenchement comprend une branche comportant un premier dipôle à fonction diode et un deuxième dipôle à fonction diode reliés en anti-série, une extrémité de cette branche étant connectée à la première borne de ce circuit de déclenchement et une autre extrémité de ladite branche étant reliée à la première borne de l'autre circuit de déclenchement. Par branche comprenant des premier et deuxième dipôles à fonction diode reliés en anti-série, on désigne le cas où, dans cette branche, les premier et deuxième dipôles ont leurs anodes reliées entre elles, ou ont leurs cathodes reliées entre elles.

Selon un mode de réalisation, chaque circuit de déclenchement comprend une troisième borne connectée à la première borne de l'autre circuit. Dans un tel mode de réalisation, dans chaque circuit de déclenchement, la branche comportant les premier et deuxième dipôles en anti-série est connectée entre les première et troisième bornes de ce circuit, ou, dit autrement, une extrémité de cette branche est connectée à la première borne du circuit et une autre extrémité de cette branche est connectée à la troisième borne de ce circuit.

Selon un autre mode de réalisation, dans chaque circuit de déclenchement, la branche comportant les premier et deuxième dipôles en anti-série est connectée entre les première et deuxième bornes de ce circuit, ou, dit autrement, une extrémité de cette branche est connectée à la première borne du circuit et une autre extrémité de cette branche est connectée à la deuxième borne de ce circuit.

Selon un mode de réalisation, dans chaque circuit de déclenchement, les premier et deuxième dipôles sont configurés pour bloquer un courant lorsque la tension entre la première borne de ce circuit et la première borne de l'autre circuit est inférieure au seuil du circuit.

Selon un mode de réalisation, dans chaque circuit de déclenchement, les premier et deuxième dipôles sont en outre configurés pour conduire un courant lorsque la tension entre la première borne du circuit et la première borne de l'autre circuit est supérieure ou égale au seuil de ce circuit.

Selon un mode de réalisation, chaque circuit de déclenchement est configuré pour que la conduction d'un courant dans le premier dipôle de ce circuit provoque un couplage électrique des première et deuxième bornes dudit circuit.

Selon un mode de réalisation, dans chaque circuit de déclenchement, un seuil de mise en conduction directe du deuxième dipôle et un seuil de mise en conduction inverse du premier dipôle déterminent au moins en partie le seuil du circuit de déclenchement. Par seuil de mise en conduction directe d'un dipôle à fonction diode, on désigne une valeur de la tension de l'anode du dipôle, référencé par rapport à la cathode du dipôle, au-dessus de laquelle le dipôle laisse circuler un courant positif de son anode vers sa cathode. De manière similaire, par seuil de mise en conduction inverse d'un dipôle à fonction diode, on désigne une valeur de la tension de la cathode du dipôle, référencé par rapport à l'anode du dipôle, au-dessus de laquelle le dipôle laisse circuler un courant positif de sa cathode vers son anode.

La figure 2 représente des courbes C0, C2, C3, C4, C5 et C6 illustrant différentes mises en conduction d'un transistor MOS, dans cet exemple à canal N. Chaque courbe illustre l'évolution d'un courant Is entre le drain et la source du transistor lorsque la source de ce transistor est à la masse GND et que le potentiel Vd de drain du transistor augmente. Chaque courbe correspond à un potentiel différent appliqué à la grille du transistor.

La courbe C0 de la figure 2 illustre le cas où le potentiel appliqué sur la grille du transistor est nul, ou, dit autrement, est égal au potentiel de masse GND. Lorsque le potentiel de drain Vd du transistor augmente au-delà du seuil de repliement Vsb du transistor, le transistor présente alors, entre ses bornes de conduction, une impédance différentielle négative. Plus précisément, tant que le potentiel Vd est inférieur au seuil Vsb, le courant Is est nul ou presque. En outre, après que le potentiel Vd ait atteint le seuil Vsb, un courant Is non nul circule dans le transistor, ce courant Is augmentant en même temps que le potentiel Vd diminue du fait de l'impédance différentielle négative du transistor.

Les courbes C2, C3, C4, C5 et C6 illustrent des cas où le potentiel appliqué à la grille du transistor est non nul, ce potentiel étant plus élevé pour la courbe C3 que pour la courbe C2, plus élevé pour la courbe C4 que pour la courbe C3, plus élevé pour la courbe C5 que pour la courbe C4 et plus élevé pour la courbe C6 que pour la courbe C5.

On constate que pour le cas de la courbe C2, le transistor considéré présente encore une impédance différentielle négative, c'est-à-dire que la courbe présente une zone où le courant Is augmente alors que le potentiel Vd diminue, mais que la valeur de cette impédance négative est plus faible que dans le cas de la courbe C0. Pour les cas des courbes C3, C4, C5 et C6, cette impédance différentielle négative est supprimée.

En outre, on constate que, plus le potentiel sur la grille du transistor est élevé, plus la valeur maximale que peut prendre le potentiel Vd est faible.

On constate également que, plus le potentiel sur la grille du transistor est élevé, plus la valeur du courant Is est élevée pour une valeur donnée de potentiel Vd.

Ainsi, la prévision de circuits de déclenchement associés aux transistors respectifs 208 et 209 permet, lors d'une surtension entre les noeuds 201 et 202 provoquant une augmentation du potentiel de drain de l'un de ces transistors, que le circuit de déclenchement associé à ce transistor provoque une augmentation correspondante du potentiel de grille de ce transistor. Il en résulte que le transistor fonctionne alors de la manière illustrée par les courbes C3, C4, C5 et C6, et ne présente plus d'impédance différentielle négative. En outre, pour un potentiel de drain donné, plus le potentiel de grille de ce transistor sera élevé lors d'une surtension entre les noeuds 201 et 202, plus le courant Is circulant entre les bornes de conduction du transistor sera élevé, permettant alors une protection plus efficace contre cette surtension.

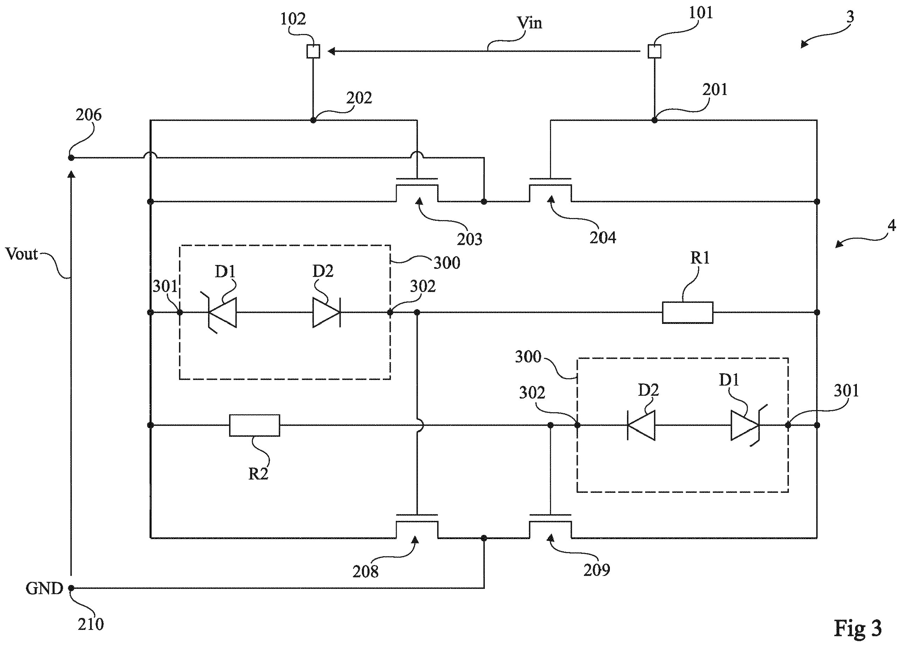

Plusieurs modes de réalisation et variantes de circuits de déclenchement vont maintenant être décrits en relation avec les figures 3 à 6.

La figure 3 illustre, sous la forme d'un circuit, une partie d'un dispositif 3 comprenant un pont redresseur 4 muni de circuits de déclenchement selon un mode de réalisation.

Le dispositif 3 est similaire au dispositif 1 de la figure 1, seules les différences entre ces dispositifs 1 et 3 étant ici détaillées.

Plus précisément, le dispositif 3 diffère du dispositif 1 par son pont redresseur de tension 4, différent du pont redresseur de tension 2. Par rapport au pont redresseur 2, le pont redresseur 4 comprend une résistance R1 connectée entre le noeud 201 et la grille du transistor 208, et une résistance R2 connectée entre le noeud 202 et la grille du transistor 209. Le pont redresseur 4 diffère en outre du pont redresseur 2 en ce qu'il comprend, pour chacun des transistors 208 et 209, un circuit de déclenchement 300 associé à ce transistor. Chaque circuit 300 comprend une première borne 301 et une deuxième borne 302. Le circuit 300 associé au transistor 208, respectivement 209, a sa borne 301 connectée au drain du transistor 208, respectivement 209, et sa borne 302 connectée à la grille du transistor 208, respectivement 209.

Chaque circuit 300 comprend une branche comportant un premier dipôle à fonction diode D1 et un deuxième dipôle à fonction diode D2 reliés entre eux en anti-série.

Dans le mode de réalisation illustré par la figure 3, dans chaque circuit 300, la branche comportant les dipôles D1 et D2 en anti-série est connectée entre les bornes 301 et 302 du circuit, ou, dit autrement, a une extrémité connectée à la borne 301 du circuit 300 et une autre extrémité connectée à la borne 302 du circuit 300.

Dans l'exemple de la figure 3, dans chaque circuit 300, les dipôles D1 et D2 ont leurs cathodes connectées entre elles et leurs anodes connectées aux bornes 301 et 302 respectivement. Dans un autre exemple non représenté, dans chaque circuit 300, les dipôles D1 et D2 ont leurs anodes connectées entre elles et leurs cathodes connectées aux bornes 301 et 302 respectivement.

Le fonctionnement normal du pont 4, c'est-à-dire en l'absence de surtension entre les noeuds 201 et 202, est le suivant. Du fait de l'absence de surtension entre les noeuds 201 et 202, la tension entre les noeuds 202 et 201 (tension du noeud 202 référencée par rapport au noeud 201) est inférieure au seuil du circuit 300 associé au transistor 208, et la tension entre les noeuds 201 et 202 (tension du noeud 201 référencée par rapport au noeud 202) est inférieure au seuil du circuit 300 associé au transistor 209. Les dipôles D1 et D2 du circuit 300 associé au transistor 208, respectivement 209, bloquent alors la circulation d'un courant entre les bornes 301 et 302 du circuit associé au transistor 208, respectivement 209, et dans la résistance R1, respectivement R2. Il en résulte que le potentiel du noeud 202, respectivement 201, se retrouve sur la grille du transistor 209, respectivement 208.

Plus particulièrement, dans l'exemple de la figure 3, lorsque le potentiel du noeud 202 est supérieur au potentiel du noeud 201, le dipôle D2 du circuit 300 associé au transistor 209 est polarisé en inverse et est équivalent à un circuit ouvert. En outre, le dipôle D1 du circuit 300 associé au transistor 208 est également polarisé en inverse, mais la tension à ses bornes est inférieure à son seuil de mise en conduction en inverse, d'où il résulte que ce dipôle D2 est équivalent à un circuit ouvert. Par ailleurs, dès que la tension entre le noeud 202 et le noeud 201 devient supérieure à la tension de seuil du transistor 209, celui-ci commute à l'état passant et relie électriquement le noeud 201 au noeud 210, le transistor 208 étant à l'état bloqué.

Le fonctionnement normal du pont 4 lorsque le potentiel du noeud 201 est supérieur à celui du noeud 202 se déduit, par symétrie, du fonctionnement décrit ci-dessus.

Le fonctionnement du pont 4 lors d'une surtension entre les noeuds 201 et 202 est le suivant. On considère à titre d'exemple le cas d'une surtension positive. Le transistor 209 et son circuit 300 associé se comportent alors comme en fonctionnement normal, ou, dit autrement, le circuit 300 associé au transistor 209 est équivalent à un circuit ouvert entre ses bornes 301 et 302, et le transistor 209 est passant. En outre, dès que la tension entre le noeud 202 et le noeud 201 devient supérieure au seuil du circuit 300 associé au transistor 208, un courant circule dans les dipôles D1 et D2 de ce circuit et dans la résistance R1. Il en résulte que le potentiel de grille du transistor 208 augmente avec le potentiel du noeud 202. Dit autrement, le potentiel sur la grille du transistor 208 est alors égal au potentiel du noeud 202 moins la chute de tension dans les dipôles D1 et D2 du circuit 300 associé au transistor 208. Dans l'exemple de la figure 3, le seuil de chaque circuit 300 est égal à la somme du seuil de mise en conduction inverse du dipôle D1 et du seuil de mise en conduction directe du dipôle D2.

Le fonctionnement du pont 4 en cas de surtension négative entre les noeuds 201 et 202 se déduit, par symétrie, du fonctionnement décrit ci-dessus en cas de surtension positive.

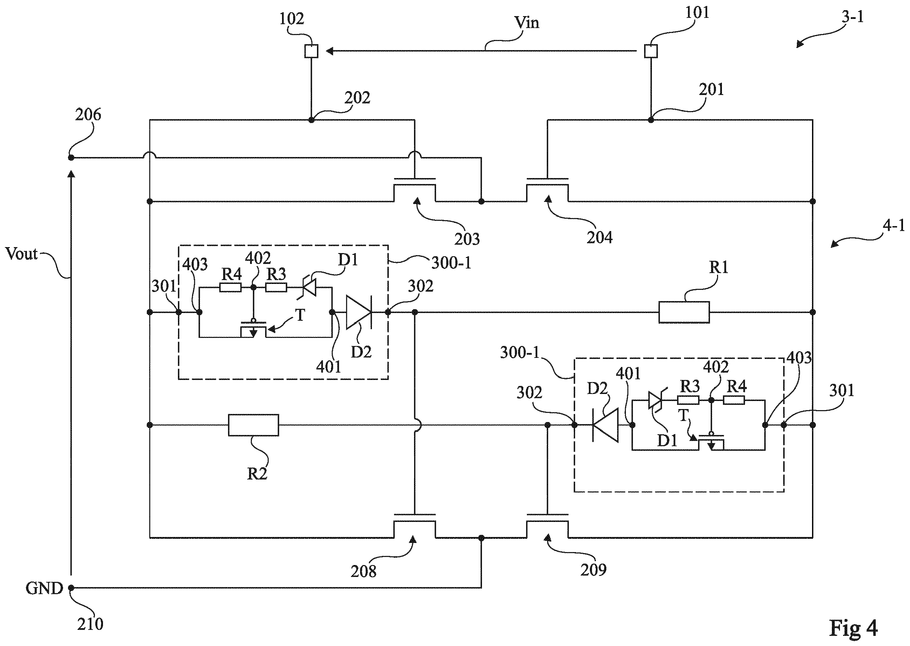

La figure 4 illustre, sous la forme d'un circuit, une partie d'un dispositif 3-1 comprenant un pont redresseur 4-1 selon un autre mode de réalisation.

Le dispositif 3-1 est similaire au dispositif 3 de la figure 3, seules les différences entre ces dispositifs 3-1 et 3 étant ici détaillées. Plus précisément, le dispositif 3-1 diffère du dispositif 3 par son pont redresseur de tension 4-1, différent du pont redresseur de tension 4, le pont redresseur 4-1 comprenant un circuit de déclenchement 300-1 à la place de chaque circuit 300 du pont redresseur 4. Chaque circuit 300-1 comprend une première borne 301 et une deuxième borne 302. Le circuit 300-1 associé au transistor 208, respectivement 209, a sa borne 301 connectée au drain du transistor 208, respectivement 209, et sa borne 302 connectée à la grille du transistor 208, respectivement 209.

Chaque circuit 300-1 comprend une branche comportant un premier dipôle à fonction diode D1 et un deuxième dipôle à fonction diode D2 reliés entre eux en anti-série.

Dans le mode de réalisation illustré par la figure 4, dans chaque circuit 300-1, la branche comportant les dipôles D1 et D2 en anti-série est connectée entre les bornes 301 et 302 du circuit. Dans chaque circuit 300-1, la branche comportant les dipôles D1 et D2 en anti-série comprend en outre une résistance R3 connectée en série avec le premier dipôle D1 entre un noeud 401 et un noeud 402, et une résistance R4 connectée entre le noeud 402 et un noeud 403. Chaque circuit 300-1 comprend en outre un transistor T dont une borne de commande est connectée au noeud 402 et dont des bornes de conduction sont connectées respectivement aux noeuds 401 et 403. Chaque circuit est configuré pour qu'une chute de tension dans sa résistance R4 conditionne une mise en conduction de son transistor T.

Selon un mode de réalisation, comme cela est illustré en figure 4, dans chaque circuit 300-1, le transistor T est un transistor MOS à canal P, la source et le drain du transistor T étant alors reliés, de préférence connectés, aux noeuds 403 et 401 respectivement. De préférence, la région de corps du transistor T est reliée à la source du transistor T, de manière que les régions de corps et de source du transistor T soient au même potentiel.

Dans une variante de réalisation non illustrée, dans chaque circuit 300-1, le transistor T est remplacé par un transistor bipolaire PNP dont la base constitue une borne de commande du transistor et est connectée au noeud 402, dont l'émetteur est connecté au noeud 403 et dont le collecteur est connecté au noeud 401.

Selon un mode de réalisation, comme cela est illustré en figure 4, dans chaque circuit 300-1, le dipôle D2 est connecté entre le noeud 401 et la borne 302 du circuit 300-1. Plus particulièrement, dans cet exemple, la cathode du dipôle D2 est connectée à la borne 302 du circuit 300-1. Le noeud 403 est alors, dans cet exemple, connecté à la borne 301. Dans une variante de réalisation non illustrée, dans chaque circuit 300-1, le dipôle D2 est connecté entre la borne 301 et noeud 403 du circuit 300-1. Plus particulièrement, l'anode du dipôle D2 est par exemple connectée à la borne 301 du circuit 300-1, le noeud 401 étant par exemple connecté à la borne 302.

Le fonctionnement normal du pont 4-1, est similaire à celui du pont 4 (figure 3) décrit précédemment. En particulier, dans chaque circuit 300-1, quand aucun courant ne circule dans les dipôles D1 et D2 du circuit 300-1, la tension aux bornes de la résistance R4 est nulle, et le transistor T est bloqué. Ainsi, aucun courant ne circule entre les bornes 301 et 302 des circuits 300-1, ni dans les résistances R1 et R2.

Le fonctionnement du pont 4 lors d'une surtension entre les noeuds 201 et 202 est le suivant. On considère à titre d'exemple le cas d'une surtension positive. Comme en fonctionnement normal, le circuit 300-1 associé au transistor 209 est équivalent à un circuit ouvert entre ses bornes 301 et 302, et le transistor 209 est passant. En outre, dès que la tension entre le noeud 202 et le noeud 201 devient supérieure au seuil du circuit 300-1 associé au transistor 208, un courant circule dans les dipôles D1 et D2 et dans les résistances R3 et R4 de ce circuit. Dès que la chute de tension dans la résistance R4 est supérieure à la tension de seuil du transistor T, celui-ci commute à l'état passant et un courant circule entre les noeuds 403 et 401, non seulement via les résistances R4 et R3 et le dipôle D1, mais également via le transistor T. Ainsi, dès que la tension entre le noeud 202 et le noeud 201 devient supérieure au seuil du circuit 300-1 associé au transistor 208, le potentiel de grille du transistor 208 augmente avec le potentiel du noeud 202. En particulier, une fois que le transistor T de ce circuit 300-1 est passant, le potentiel sur la grille du transistor 208 est égal au potentiel du noeud 202 moins la tension de seuil du transistor T, la chute de tension dans la résistance R3 et la chute de tension dans les dipôles D1 et D2 de ce circuit 300-1.

Dans l'exemple de la figure 4-1, le seuil de chaque circuit 300-1 est égal à la somme du seuil de mise en conduction inverse du dipôle D1 et du seuil de mise en conduction directe du dipôle D2. En outre, dans chaque circuit 300-1, le transistor T commute à l'état passant quand la tension entre les bornes 301 et 302 de ce circuit dépasse la somme du seuil de mise en conduction inverse du dipôle D1, du seuil de mise en conduction directe du dipôle D2, et de la tension de seuil du transistor T.

Le fonctionnement du pont 4-1 en cas de surtension négative entre les noeuds 201 et 202 se déduit, par symétrie, du fonctionnement décrit ci-dessus en cas de surtension positive.

Un avantage d'un circuit 300-1 par rapport à un circuit 300 est qu'il permet de faire circuler, une fois que son transistor T est passant, un courant plus important entre ses bornes 301 et 302, d'où il résulte que le potentiel sur la grille du transistor 208 ou 209 auquel il est associé est plus élevé.

Un autre avantage du circuit 300-1 par rapport à un circuit 300 est que, une fois le transistor T du circuit passant, le courant dans le dipôle D1 est plus faible. Cela est particulièrement intéressant quand le dipôle D1 n'est pas configuré pour faire passer un courant important et/ou quand la résistance interne du dipôle D1 est élevée.

Bien que cela ne soit pas représenté en figure 4, dans chaque circuit 300-1, une capacité de compensation en fréquence peut être prévue entre les noeuds 401 et 403 et/ou une capacité de compensation en fréquence peut être prévue entre les noeuds 401 et 402. De telles capacités permettent une réponse plus rapide du circuit 300-1 en cas de surtension. Toutefois, la valeur de chacune de ces capacités est de préférence choisie relativement faible, par exemple inférieure à 1 pF, pour ne pas perturber le fonctionnement du pont 4-1 en l'absence de surtension entre les plots 101 et 102.

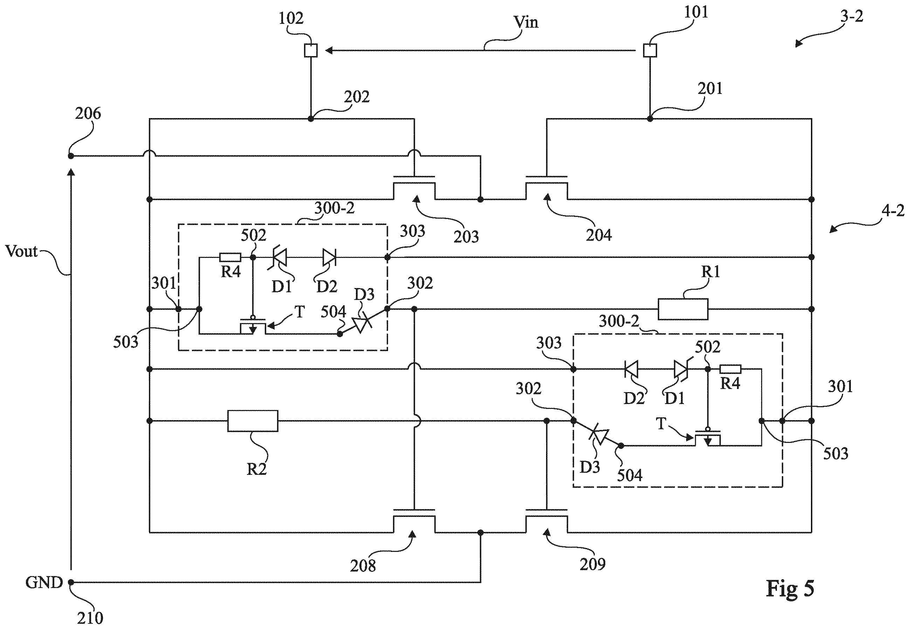

La figure 5 illustre, sous la forme d'un circuit, une partie d'un dispositif 3-2 comprenant un pont redresseur 4-2 selon encore un autre mode de réalisation.

Le dispositif 3-2 est similaire au dispositif 3-1 de la figure 4, seules les différences entre ces dispositifs 3-2 et 3-1 étant ici détaillées. Plus précisément, le dispositif 3-2 diffère du dispositif 3-1 par son pont redresseur de tension 4-2, le pont redresseur 4-2 comprenant un circuit de déclenchement 300-2 à la place de chaque circuit 300-1 du pont redresseur 4-1. Chaque circuit 300-2 comprend une première borne 301, une deuxième borne 302 et, dans ce mode de réalisation, une troisième borne 303. Le circuit 300-2 associé au transistor 208, respectivement 209, a sa borne 301 connectée au drain du transistor 208, respectivement 209, sa borne 302 connectée à la grille du transistor 208, respectivement 209, et sa borne 303 connectée au noeud 201, respectivement 202.

Chaque circuit 300-2 comprend une branche comportant un premier dipôle à fonction diode D1 et un deuxième dipôle à fonction diode D2 reliés entre eux en anti-série.

Dans ce mode de réalisation, dans chaque circuit 300-2, la branche comportant les dipôles D1 et D2 en anti-série est connectée entre les bornes 301 et 303 du circuit. Dans chaque circuit 300-2, la branche comportant les dipôles D1 et D2 en anti-série comprend en outre une résistance R4 connectée en série avec les dipôles D1 et D2. Chaque circuit 300-2 comprend en outre un transistor T dont une borne de commande est connectée à une borne 502 de la résistance R4, dont une borne de conduction 503 est reliée à la borne 301 du circuit 300-2, et dont une autre borne de conduction 504 est reliée à la borne 302 du circuit 300-2. Chaque circuit 300-2 est configuré pour qu'une chute de tension dans sa résistance R4 conditionne une mise en conduction de son transistor T.

Selon un mode de réalisation, comme cela est illustré en figure 5, dans chaque circuit 300-2, le transistor T est un transistor MOS à canal P ayant sa source 503 reliée à la borne 301 du circuit 300-2, et son drain 504 relié à la borne 302 du circuit. La borne de la résistance R4 opposée à la borne 502 est alors connectée à la borne 503 du transistor T. De préférence, la région de corps du transistor T est reliée à la source du transistor T, de manière que les régions de corps et de source du transistor T soient au même potentiel. Selon une variante de réalisation non illustrée, dans chaque circuit 300-2, le transistor T est remplacé par un transistor bipolaire PNP dont la base constitue une borne de commande du transistor et est connectée à la borne 502 de la résistance R4, dont l'émetteur 503 est relié à la borne 301 du circuit 300-2 et dont le collecteur 505 est relié à la borne 302 du circuit 300-2. Dans cette variante, la borne de la résistance R4 opposée à la borne 502 est alors connectée à l'émetteur 503 du transistor.

Selon un mode de réalisation, comme cela est illustré en figure 5, dans chaque circuit 300-2, la borne 503 du transistor T est connectée à la borne 301 du circuit 300-2, et le dipôle D2 est connecté entre la borne 503 du transistor T et la borne 303 du circuit 300-2, par exemple avec sa cathode du côté de la borne 303 du circuit, par exemple connectée à la borne 303. Le circuit 300-2 comprend alors en outre un dipôle à fonction diode D3 connecté en série avec le transistor T, entre la borne 503 du transistor T et la borne 302, de préférence entre la borne 504 du transistor T et la borne 302 du circuit 300-2, la cathode du dipôle D3 étant par exemple connectée à la borne 302 du circuit 300-2. Le dipôle D3 est configuré pour bloquer un courant entre les bornes 301 et 302 du circuit 300-2 lorsque la tension entre la borne 301 du circuit 300-2 et la borne 301 de l'autre circuit 300-2 est inférieure au seuil de ce circuit. Dit autrement, le dipôle D3 est configuré pour bloquer le courant entre les bornes 301 et 302 du circuit 300-2 lorsque le pont est en fonctionnement normal, c'est-à-dire notamment quand le potentiel sur la borne 302 est supérieur au potentiel sur la borne 301 de ce circuit.

Le fonctionnement normal du pont 4-2, est similaire à celui du pont 4 (figure 3) décrit précédemment. En particulier, dans chaque circuit 300-2, aucun courant ne circule dans les dipôles D1, D2 et D3 du circuit 300-2, d'où il résulte qu'aucun courant ne circule entre la borne 301 du circuit 300-2 et chacune des bornes 302 et 303 de ce circuit.

Le fonctionnement du pont 4-2 lors d'une surtension entre les noeuds 201 et 202 est le suivant. On considère à titre d'exemple le cas d'une surtension positive. Comme en fonctionnement normal, le circuit 300-2 associé au transistor 209 est équivalent à un circuit ouvert entre ses bornes 301 et 302 et le transistor 209 est passant. En outre, dès que la tension entre le noeud 202 et le noeud 201 devient supérieure au seuil du circuit 300-2 associé au transistor 208, un courant circule dans les dipôles D1 et D2 de ce circuit, et donc dans la résistance R4. Dès que la chute de tension dans la résistance R4 est supérieure à la tension de seuil du transistor T, celui-ci commute à l'état passant et un courant circule entre les bornes 301 et 302 de ce circuit, donc dans la résistance R1. Il en résulte que le potentiel de grille du transistor 208 augmente avec le potentiel du noeud 202. Dit autrement, le potentiel sur la grille du transistor 208 est alors égal au potentiel du noeud 202 moins la chute de tension entre les bornes 503 et 504 du transistor T et la chute de tension dans le dipôle D3. Dans l'exemple de la figure 5, le seuil de chaque circuit 300 est égal à la somme du seuil de mise en conduction inverse du dipôle D1, du seuil de mise en conduction directe du dipôle D2 et de la tension de seuil du transistor T.

A titre d'exemple, on considère le cas où les dipôles D2 et D3 ont un seuil de mise en conduction directe égal à 0,6 V, le dipôle D1 a un seuil de mise en conduction inverse égal à 5 V. Dans ce cas, lorsqu'un courant circule de la borne 301 à la borne 302 du fait que la tension entre les bornes 301 et 303 (référencée à la borne 303) est supérieure au seuil du circuit 300-2, la tension sur la grille du transistor T peut au plus être égale à 5,6 V, c'est-à-dire la somme du seuil de mise en conduction directe du dipôle D2 et du seuil de mise en conduction inverse du dipôle D1. La résistance R4 supporte alors la différence entre la tension sur la grille du transistor T et la tension sur la borne 301. Une fois que le transistor T est passant, la chute de tension entre les bornes 301 et 302 est égale au seuil de mise en conduction directe du dipôle D3 si on néglige la chute de tension entre les bornes de conduction du transistor T. Ainsi, la tension sur la borne 302 est alors égale à la tension sur le noeud 202 moins les 0,6 V dans D3, et peut être égal à 6,4 V quand la tension sur le noeud 202 est de 7 V. En reprenant ces exemples de valeur numérique dans le cas de la figure 4, la tension sur la borne 302 du circuit est au plus égale à la tension sur le noeud 202 moins la somme du seuil de mise en conduction directe de D2, du seuil de mise en conduction inverse de D1 et du seuil de mise en conduction du transistor T par exemple égal à 0,7 V, ce qui conduit à une tension sur la borne 302 égale à 0,7 V et bien inférieure à celle du cas de la figure 5.

Le fonctionnement du pont 4-2 en cas de surtension négative entre les noeuds 201 et 202 se déduit, par symétrie, du fonctionnement décrit ci-dessus en cas de surtension positive.

Dans une variante de réalisation non illustrée, dans chaque circuit 300-2, le dipôle D2 est connecté entre la borne 301 du circuit 300-2 et la borne 503 du transistor T, par exemple avec l'anode du dipôle D2 connectée à la borne 301. Dans cette variante, la borne 504 du transistor T est connectée à la borne 302 du circuit 300-2. En outre, dans cette variante, le dipôle D3 peut être omis, sa fonction de blocage de courant étant assurée par le dipôle D2. Toutefois, dans cette variante, il peut être utile de modifier la connexion de la région de corps du transistor T pour éviter que, en fonctionnement normal, quand le potentiel de la borne 302 est supérieur au potentiel de la borne 301, la diode drain-substrat du transistor T soit passante en direct et puisse éventuellement déclencher le transistor bipolaire PNP du transistor T ayant son émetteur correspondant au drain du transistor T, sa base correspondant à un caisson de type N dans lequel est formé le transistor T et son collecteur correspondant au substrat de type P dans lequel est formé ce caisson de type N. Par exemple, on peut alors prévoir que le transistor T soit associé à deux transistors MOS connectés de manière croisée entre la source et le drain du transistor T, de manière à assurer que le caisson N du transistor T soit au plus bas des deux potentiels de source et de drain du transistor T.

La personne du métier est en mesure de déduire le fonctionnement du pont 4-2 selon cette variante, à partir du fonctionnement décrit ci-dessus.

Un avantage des modes de réalisation et variante du circuit 300-2 décrits ci-dessus par rapport à un circuit 300-1 est qu'il permet, une fois que son transistor T est passant, de réduire la chute de tension entre ses bornes 301 et 302. Il en résulte que le potentiel sur la grille du transistor 208 ou 209 auquel il est associé est plus élevé.

Bien que cela ne soit pas représenté en figure 5, une capacité de compensation en fréquence peut être prévue en parallèle du dipôle D1 et/ou une capacité de compensation en fréquence peut être prévue en parallèle du transistor T. De telles capacités permettent une réponse plus rapide du circuit 300-2 en cas de surtension. Toutefois, la valeur de chacune de ces capacités est de préférence choisie relativement faible, par exemple inférieure à 1 pF, pour ne pas perturber le fonctionnement du pont 4-2 en l'absence de surtension entre les plots 101 et 102.

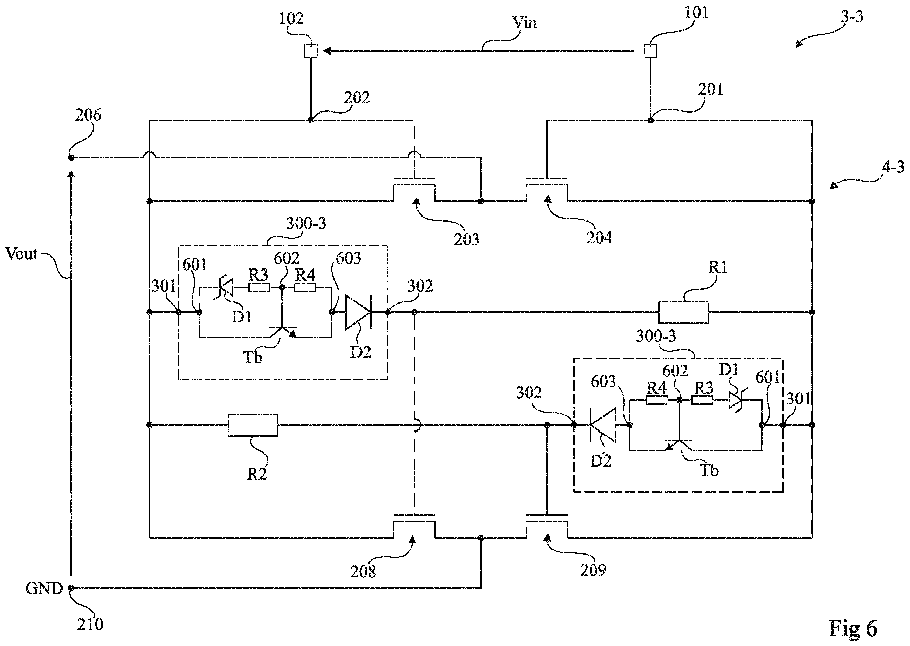

La figure 6 illustre, sous la forme d'un circuit, une partie d'un dispositif 3-3 comprenant un pont redresseur 4-3 selon encore un autre mode de réalisation.

Le dispositif 3-3 est similaire au dispositif 3-1 de la figure 4, seules les différences entre ces dispositifs 3-3 et 3-1 étant ici détaillées. Plus précisément, le dispositif 3-3 diffère du dispositif 3-1 par son pont redresseur de tension 4-3, le pont redresseur 4-3 comprenant un circuit de déclenchement 300-3 à la place de chaque circuit 300-1 du pont redresseur 4-1. Chaque circuit 300-3 comprend une première borne 301 et une deuxième borne 302. Le circuit 300-3 associé au transistor 208, respectivement 209, a sa borne 301 connectée au drain du transistor 208, respectivement 209, et sa borne 302 connectée à la grille du transistor 208, respectivement 209.

Chaque circuit 300-3 comprend une branche comportant un premier dipôle à fonction diode D1 et un deuxième dipôle à fonction diode D2 reliés entre eux en anti-série.

Dans ce mode de réalisation, dans chaque circuit 300-3, la branche comportant les dipôles D1 et D2 en anti-série est connectée entre les bornes 301 et 302 du circuit. Dans chaque circuit 300-3, la branche comportant les dipôles D1 et D2 en anti-série comprend en outre une résistance R3 connectée en série avec le premier dipôle D1 entre un noeud 601 et un noeud 602 et une résistance R4 connectée entre le noeud 602 et un noeud 603. Chaque circuit 300-3 comprend en outre un transistor Tb dont une borne de commande est connectée au noeud 602 et dont des bornes de conduction sont connectées respectivement aux noeuds 601 et 603. Chaque circuit est configuré pour qu'une chute de tension dans sa résistance R4 conditionne une mise en conduction de son transistor Tb.

Selon un mode de réalisation, comme cela est illustré en figure 6, dans chaque circuit 300-3, le transistor Tb est un transistor bipolaire NPN, l'émetteur et le collecteur du transistor Tb étant alors reliés, de préférence connectés, aux noeuds 603 et 601 respectivement. Dans une variante de réalisation non illustrée, dans chaque circuit 300-3, le transistor bipolaire Tb est remplacé par un transistor MOS à canal N dont la grille constitue une borne de commande du transistor et est connectée au noeud 602, dont la source est connectée au noeud 603 et dont le drain est connecté au noeud 601. De préférence, la région de corps du transistor MOS est alors reliée à la source du transistor, de manière que les régions de corps et de source du transistor soient au même potentiel.

Selon un mode de réalisation, comme cela est illustré en la figure 6, dans chaque circuit 300-3, le dipôle D2 est connecté entre le noeud 603 et la borne 302 du circuit 300-2, la cathode du dipôle D2 étant par exemple connectée à la borne 302 du circuit 300-1. Dans une variante de réalisation non illustrée, dans chaque circuit 300-2, le dipôle D2 est connecté entre la borne 301 et noeud 601 du circuit 300-3, l'anode du dipôle D2 étant par exemple connectée à la borne 301 du circuit 300-3.

Le fonctionnement normal du pont 4-3, est similaire à celui du pont 4 (figure 3) décrit précédemment. En particulier, dans chaque circuit 300-3, quand aucun courant ne circule dans les dipôles D1 et D2 du circuit 300-3, la tension aux bornes de la résistance R4 est nulle, et le transistor Tb est bloqué. Ainsi, aucun courant ne circule entre les bornes 301 et 302 des circuits 300-3, ni dans les résistances R1 et R2.

Le fonctionnement du pont 4-3 lors d'une surtension entre les noeuds 201 et 202 est le suivant. On considère à titre d'exemple le cas d'une surtension positive. Comme en fonctionnement normal, le circuit 300-3 associé au transistor 209 est équivalent à un circuit ouvert entre ses bornes 301 et 302, et le transistor 209 est passant. En outre, dès que la tension entre le noeud 202 et le noeud 201 devient supérieure au seuil du circuit 300-3 associé au transistor 208, un courant circule dans les dipôles D1 et D2 de ce circuit et dans la résistance R4. Dès que la chute de tension dans la résistance R4 est supérieure à la tension de seuil du transistor Tb, un courant circule entre les noeuds 601 et 603, non seulement via les résistances R4 et R3 et le dipôle D1, mais également via le transistor Tb. Il en résulte que, dès que la tension entre le noeud 202 et le noeud 201 devient supérieure au seuil de ce circuit 300-3, le potentiel de grille du transistor 208 augmente avec le potentiel du noeud 202. En particulier, dès que le transistor Tb de ce circuit 300-3 est passant, le potentiel sur la grille du transistor 208 est alors égal au potentiel du noeud 202 moins la tension de seuil du transistor Tb, la chute de tension dans la résistance R3 et la chute de tension dans les dipôles D1 et D2 de ce circuit 300-3.

Dans l'exemple de la figure 6, le seuil de chaque circuit 300-3 est égal à la somme du seuil de mise en conduction inverse du dipôle D1 et du seuil de mise en conduction directe du dipôle D2. En outre, le transistor Tb commute à l'état passant dès que la tension entre les bornes 301 et 302 du circuit dépasse la somme du seuil de mise en conduction inverse du dipôle D1, du seuil de mise en conduction directe du dipôle D2 et du seuil du transistor Tb.

Le fonctionnement du pont 4-3 en cas de surtension négative entre les noeuds 201 et 202 se déduit, par symétrie, du fonctionnement décrit ci-dessus en cas de surtension positive.

Un avantage d'un circuit 300-3 par rapport à un circuit 300 est qu'il permet de faire circuler, une fois que son transistor Tb est passant, un courant plus important entre ses bornes 301 et 302, d'où il résulte que le potentiel sur la grille du transistor 208 ou 209 auquel il est associé est plus élevé.

Bien que cela ne soit pas représenté en figure 6, dans chaque circuit 300-3, une capacité de compensation en fréquence peut être prévue entre les noeuds 601 et 603 et/ou une capacité de compensation en fréquence peut être prévue entre les noeuds 601 et 602. De telles capacités permettent une réponse plus rapide du circuit 300-3 en cas de surtension. Toutefois, la valeur de chacune de ces capacités est de préférence choisie relativement faible, par exemple inférieure à 1 pF, pour ne pas perturber le fonctionnement du pont 4-3 en l'absence de surtension entre les plots 101 et 102.

Selon un mode de réalisation, les dipôles D1 des circuits 300, 300-1, 300-2 et 300-3 décrits précédemment sont mis en oeuvre par une unique diode Zener.

Selon un autre mode de réalisation, les dipôles D1 des circuits 300, 300-1, 300-2 et 300-3 décrits précédemment sont mis en oeuvre au moyen de plusieurs diodes Zener en parallèle ce qui permet de réduire la résistance interne du dipôle D1 et donc la chute de tension entre ses bornes quand un courant y circule.

Selon encore un autre mode de réalisation, les dipôles D1 des circuits 300, 300-1, 300-2 et 300-3 décrits précédemment sont mis en oeuvre au moyen de plusieurs transistors MOS en série, chacun monté en diode, c'est-à-dire avec son drain et sa grille connectés entre eux, les drains des transistors étant du côté de la cathode du dipôle. Cela permet de réduire ou d'ajuster plus finement le seuil de mise en conduction inverse des dipôles D1, et donc des circuits 300, 300-1, 300-2 et 300-3, au prix d'une augmentation de la résistance interne des dipôles D1. Les dipôles D1 des circuits 300, 300-1, 300-2 et 300-3, et l'éventuel dipôle D3 du circuit 300-2 sont chacun mis en oeuvre au moyen d'une diode ou d'un transistor MOS monté en diode.

Pour protéger le dispositif 1 contre des surtensions, plutôt que de prévoir les circuits 300, 300-1, 300-2 ou 300-3, on aurait pu penser placer une protection contre les surtensions entre chacun des plots 101 et 102, et le noeud 210 au potentiel de masse. Toutefois, la prévision de telles protections aurait conduit à un dispositif ayant une surface plus importante que celles des dispositifs 3, 3-1, 3-2 et 3-3. En outre, de telles protections auraient introduit des capacités et des résistances parasites sur chacun des plots 101 et 102, ce qui aurait perturbé le fonctionnement du pont redresseur en l'absence de surtension.

Selon un mode de réalisation dans lequel le dispositif 3, 3-1, 3-2 ou 3-3 comprend un transistor MOS de retro-modulation connecté entre ses plots 101 et 102, on peut prévoir que deux circuits 300, 300-1, 300-2 ou 300-3 respectivement soient associés à ce transistor de retro-modulation, de manière à le rendre conducteur lorsqu'une surtension se produit sur l'un ou l'autre des plots 101 et 102. Un premier des deux circuits 300, 300-1, 300-2 ou 300-3 a alors sa borne 301 connectée au plot 102, son éventuelle borne 303 connectée au plot 101, et sa borne 302 connectée à la grille du transistor de retro-modulation et reliée au plot 101 par une résistance. Le deuxième des deux circuits a alors sa borne 301 connectée au plot 101, son éventuelle borne 303 connectée au plot 102, et sa borne 302 connectée à la grille du transistor de retro-modulation et reliée au plot 102 par une autre résistance.

Bien que cela ne soit pas revendiqué ici, deux circuits de déclenchement peuvent être associés au transistor de retro-modulation, de la façon décrite ci-dessus, sans que les transistors 208 et 209 soient associés chacun à un circuit de déclenchement.

Selon des modes de réalisation non illustrés, les circuits de déclenchement d'un même dispositif 3, 3-1, 3-2 ou 3-3 peuvent être différents entre eux, y compris lorsque de tels circuits sont associés au transistor de retro-modulation. Par exemple, le circuit 300 du pont 3 associé au transistor 208 peut être remplacé par un circuit 300-1, 300-2 ou 300-3.

Selon un mode de réalisation, le pont redresseur 4, 4-1, 4-2 ou 4-3 et les plots 101 et 102 du dispositif 3, 3-1, 3-2 ou 3-3 respectivement appartiennent à un même circuit intégré, l'enroulement conducteur d'antenne étant de préférence externe à ce circuit intégré.

Bien que l'on ait décrit ici des dispositifs 3, 3-1, 3-2 et 3-3 de communication sans fil, par exemple des dispositifs de type NFC (near field communication - communication en champ proche) ou des dispositifs conformes à la norme ISO 14443 ou 15693, les ponts redresseurs 4, 4-1, 4-2 et 4-3 peuvent être mis en oeuvre dans d'autres dispositifs, pour protéger des circuits de ces autres dispositifs d'éventuelles surtensions, par exemple provoquées par des décharges électrostatiques, sur l'un ou l'autre de deux plots auxquels sont reliés les noeuds respectifs 201 et 202 de ces ponts redresseurs.

Par ailleurs, la personne du métier est mesure d'adapter la description faite ci-dessus au cas où les transistors 208 et 209 sont à canal P, par exemple en inversant tous les types N et P et les valeurs des tensions décrits précédemment, par exemple en remplaçant chaque transistor MOS à canal N, respectivement, par un transistor MOS à canal P, respectivement N, en remplaçant chaque transistor NPN, respectivement PNP, par un transistor PNP, respectivement NPN, en remplaçant un substrat P du circuit relié au potentiel le plus bas par un substrat N relié au potentiel le plus haut, etc. Dans ce cas, le seuil d'un circuit de déclenchement est négatif et est, en valeur absolue, égal au seuil des circuits de déclenchement décrits en relation avec les figures 2 à 6. La tension entre la borne 301 de ce circuit et la borne 301 de l'autre circuit de déclenchement est alors dite supérieure au seuil du circuit si elle est de même signe que le seuil et de valeur absolue plus grande que la valeur absolue du seuil. Dit autrement, que les transistors 208 et 209 soient à canal N ou à canal P, un circuit de déclenchement est configuré pour coupler électriquement ses bornes 301 et 302 quand la tension entre la borne 301 de ce circuit et la borne 301 de l'autre circuit de déclenchement est du même signe que le seuil du circuit et a une valeur absolue supérieure à celle du seuil, et pour isoler ses bornes 301 et 302 quand la tension entre la borne 301 de ce circuit et la borne 301 de l'autre circuit de déclenchement a une valeur absolue inférieure à celle du seuil et, également, quand cette tension est du signe opposé à celui du seuil du circuit.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, la personne du métier est en mesure de choisir les valeurs des résistances, les valeurs des éventuelles capacités de compensation en fréquence, la valeur du seuil de mise en conduction directe du dipôle D2, la valeur du seuil de mise en conduction directe de l'éventuel dipôle D3 et/ou et la valeur du seuil de mise en conduction inverse du dipôle D1 en fonction de l'application visée, c'est-à-dire en fonction de la tension maximale pouvant être présente entre les noeuds 201 et 202 en fonctionnement normal (sans surtension) et/ou de l'amplitude maximale des surtensions susceptibles de se produire entre ces noeud 201 et 202. A titre d'exemple, les valeurs des résistances R1 et R2 doivent être suffisamment faibles pour ne pas perturber le pont en fonctionnement normal en introduisant des délais de propagation de type R*C (avec C la capacité des grilles des transistors 208 et 209), par exemple être inférieures à 10 kΩ, et être suffisamment élevées pour permettre aux circuits de déclenchement d'augmenter la tension sur la grille des transistors 208 et 209, par exemple supérieures à 100 Ω, les résistances R1 et R2 ayant par exemple chacune une valeur de l'ordre de 1 kΩ, par exemple égale à 1 kΩ.

## Revendications

1. Dispositif (3 ; 3-1 ; 3-2 ; 3-3) comprenant un pont redresseur (4 ; 4-1 ; 4-2 ; 4-3) comprenant :
une première branche connectée entre des premier (202) et deuxième (201) noeuds d'entrée du pont et comprenant un troisième noeud (206) de sortie du pont ;
une deuxième branche comprenant des premier (208) et deuxième (209) transistors MOS connectés en série entre les premier (201) et deuxième (202) noeuds, les sources des premier (208) et deuxième (209) transistors étant reliées à un quatrième noeud (210) de sortie du pont ;
une première résistance (R1) connectée entre la grille du premier transistor (208) et le deuxième noeud (201) ;
une deuxième résistance (R2) connectée entre la grille du deuxième transistor (209) et le premier noeud (202) ; et
pour chacun des premier et deuxième transistors (208, 209), un circuit (300 ; 300-1 ; 300-2 ; 300-3) associé audit transistor (208, 209) et comprenant une première borne (301) connectée au drain dudit transistor (208, 209) et une deuxième borne (302) connectée à la grille dudit transistor (208, 209), le circuit étant configuré pour coupler électriquement ses première et deuxième bornes (301, 302) lorsque une valeur absolue d'une tension entre la première borne dudit circuit et la première borne de l'autre circuit est supérieure ou égale à une valeur absolue d'un seuil dudit circuit et que ladite tension est du même signe que ledit seuil.

2. Dispositif selon la revendication 1, dans lequel chaque circuit (300 ; 300-1 ; 300-2 ; 300-3) est en outre configuré pour isoler électriquement ses première et deuxième bornes (301, 302) lorsque la valeur absolue de la tension entre la première borne (301) dudit circuit et la première borne (301) de l'autre circuit est inférieure à la valeur absolue du seuil dudit circuit et également lorsque ladite tension est de signe opposé au signe du seuil dudit circuit.

3. Dispositif selon la revendication 1 ou 2, dans lequel la première branche du pont (4 ; 4-1 ; 4-2 ; 4-3) comprend des troisième (203) et quatrième (204) transistors MOS connectés en série entre les premier (201) et deuxième noeuds (202) et montés chacun en diode, les sources des troisième (203) et quatrième (204) transistors étant connectées au troisième noeud (206).

4. Dispositif selon la revendication 3, dans lequel les premier (208), deuxième (209), troisième (203) et quatrième (204) transistors ont un même type de canal N ou P.

5. Dispositif selon l'une quelconque des revendications 1 à 4, dans lequel chaque circuit (300 ; 300-1 ; 300-2 ; 300-3) comprend une branche comportant un premier dipôle à fonction diode (D1) et un deuxième dipôle à fonction diode (D2) reliés en anti-série, une extrémité de ladite branche étant connectée à la première borne (301) dudit circuit et une autre extrémité de ladite branche étant reliée à la première borne (301) de l'autre circuit.

6. Dispositif selon la revendication 5, dans lequel, dans chaque circuit (300 ; 300-1 ; 300-2 ; 300-3), les premier (D1) et deuxième (D2) dipôles sont configurés pour bloquer un courant lorsque la valeur absolue de la tension entre la première borne (301) dudit circuit (300 ; 300-1 ; 300-2 ; 300-3) et la première borne (301) de l'autre circuit (300 ; 300-1 ; 300-2 ; 300-3) est inférieure à la valeur absolue du seuil dudit circuit et lorsque ladite tension est de signe opposé au signe du seuil dudit circuit, et pour conduire un courant lorsque la valeur absolue de la tension entre la première borne (301) dudit circuit (300 ; 300-1 ; 300-2 ; 300-3) et la première borne (301) de l'autre circuit (300 ; 300-1 ; 300-2 ; 300-3) est supérieure ou égale à la valeur absolue du seuil dudit circuit et que ladite tension est du même signe que ledit seuil.

7. Dispositif selon la revendication 6, dans lequel chaque circuit (300 ; 300-1 ; 300-2 ; 300-3) est configuré pour que la conduction du courant dans le premier dipôle (D1) dudit circuit (300 ; 300-1 ; 300-2 ; 300-3) provoque un couplage électrique des première (301) et deuxième (302) bornes dudit circuit.

8. Dispositif selon l'une quelconque des revendications 5 à 7, dans lequel, dans au moins un des circuits (300 ; 300-1 ; 300-3), de préférence dans chaque circuit, ladite autre extrémité de la branche dudit circuit (300 ; 300-1 ; 300-3) est connectée à la deuxième borne (302) dudit circuit (300 ; 300-1 ; 300-3).

9. Dispositif selon la revendication 8, dans lequel, dans ledit au moins un des circuits (300-1 ; 300-3), de préférence dans chaque circuit, ladite branche dudit circuit comprend :
des cinquième (401 ; 601), sixième (402 ; 602) et septième (403 ; 603) noeuds ;
une troisième résistance (R3) connectée en série avec le premier dipôle (D1) entre le cinquième noeud (401 ; 601) et le sixième noeud (402 ; 602) ; et
une quatrième résistance (R4) connectée entre le sixième noeud (402 ; 602) et le septième noeud (403 ; 603),
chaque circuit (300-1 ; 300-3) comprenant en outre un transistor (T ; Tb) dont une borne de commande est connectée au sixième noeud (402 ; 602) et dont des bornes de conduction sont connectées respectivement au cinquième noeud (401 ; 601) et au septième noeud (403 ; 603), une chute de tension dans la quatrième résistance (R4) conditionnant une mise en conduction dudit transistor (T ; Tb) .

10. Dispositif selon la revendication 9, dans lequel, dans ledit au moins un des circuits (300-1 ; 300-3), de préférence dans chaque circuit :
le deuxième dipôle (D2) est connecté entre la première borne (301) dudit circuit (300-3) et le cinquième noeud (601), le septième noeud (603) étant connecté à la deuxième borne (302) dudit circuit (300-3) ; ou
le deuxième dipôle (D2) est connecté entre le septième noeud (603) et la deuxième borne (302) dudit circuit (300-3), le cinquième noeud (601) étant connecté à la première borne (301) dudit circuit (300-3) ; ou
le deuxième dipôle (D2) est connecté entre la première borne (301) dudit circuit (300-1) et le septième noeud (403), le cinquième noeud (401) étant connecté à la deuxième borne (302) dudit circuit (300-1) ; ou
le deuxième dipôle (D2) est connecté entre le cinquième noeud (401) et la deuxième borne (302) dudit circuit (300-1), le septième noeud (403) étant connecté à la première borne (301) dudit circuit (300-1).

11. Dispositif selon l'une quelconque des revendications 5 à 7, dans lequel, dans au moins un desdits circuits (300-2), de préférence dans chaque circuit, ladite autre extrémité de la branche dudit circuit (300-2) est connectée à une troisième borne (303) dudit circuit (300-2), ladite troisième borne (303) dudit circuit (300-2) étant connectée à la première borne (301) dudit autre circuit (300-2).

12. Dispositif selon la revendication 11, dans lequel, dans ledit au moins un desdits circuits (300-2), de préférence dans chaque circuit, ladite branche comprend une troisième résistance (R4) en série avec les premier et deuxième dipôles (D1, D2), chaque circuit comprenant en outre un transistor (T) dont une borne de commande est connectée à une borne de la troisième résistance (R4), dont une première borne de conduction (503) est reliée à la première borne (301) dudit circuit (300-2), et dont une deuxième borne de conduction (504) est reliée à la deuxième borne dudit circuit (300-2), une chute de tension dans la troisième résistance (R4) conditionnant une mise en conduction dudit transistor (T).

13. Dispositif selon la revendication 12, dans lequel, dans ledit au moins un desdits circuits (300-2), de préférence dans chaque circuit, le deuxième dipôle (D2) est connecté entre la première borne (301) dudit circuit (300-2) et la première borne de conduction (503) dudit transistor (T), la deuxième borne de conduction (504) dudit transistor (T) étant connectée à la deuxième borne dudit circuit

14. Dispositif selon la revendication 12, dans lequel au moins un desdits circuits (300-2), de préférence chaque circuit, comprend en outre un troisième dipôle à fonction diode (D3) connecté en série avec le transistor (T) dudit circuit entre les première et deuxième bornes (301, 302) dudit circuit (300-2), le troisième dipôle étant connecté à la deuxième borne (302) dudit circuit et la branche dudit circuit étant connectée entre les première et troisième bornes (301, 303) dudit circuit (300-2).

15. Dispositif selon l'une quelconque des revendications 5 à 14, dans lequel le premier dipôle (D1) est constitué d'une diode Zener, d'un ensemble de plusieurs diodes Zener connectées en parallèle les unes des autres, ou d'un ensemble de plusieurs transistors MOS connectés en série et étant chacun monté en diode.

16. Circuit intégré comprenant un dispositif (4 ; 4-1 ; 4-2 ; 4-3) selon l'une quelconque des revendications 1 à 15.
